# EUROPEAN PATENT APPLICATION

(11) **EP 2 930 012 A1**
(43) Date of publication of application: **14.10.2015**
(21) Application number: 14305515.0
(22) Date of filing: 08.04.2014
(51) Int. Cl.: B29D 11/00

(54) **Method for depositing a topcoat layer on a face of a substrate and flexible deposition device**

(71) Applicant: ESSILOR INTERNATIONAL (COMPAGNIE GENERALE D'OPTIQUE), 94220 Charenton-le-Pont (FR)
(72) Inventor: Fournand, Gérald, 94227 Charenton-le-Pont, Cedex (FR); Jiang, Peiqi, 94227 Charenton-le-Pont, Cedex (FR)
(74) Representative: Chauvin, Vincent

(57) **Abstract**

A method for depositing a topcoat layer on, at least, one face of a substrate, comprising the steps of:
a) providing a flexible deposition device comprising a flexible supporting medium having a supporting surface coated with a film of a topcoat material,
b) bringing into contact said film of topcoat material of the flexible deposition device with said face of the substrate,
c) applying a pressure on the flexible supporting medium so that said flexible deposition device conforms to the geometry of said face of the substrate, and
d) peeling off said flexible supporting medium from said substrate, whereby the topcoat material is at least partially separated from the flexible supporting medium and deposited on the contacted face of the substrate to form said top coat layer.

## Description

The present invention concerns a method for depositing a topcoat layer on a face of a substrate, typically a transparent optical substrate such as an ophthalmic lens or a sunglass for eyewear and a flexible deposition device for implementing the method.

It is well known in the art to deposit a topcoat layer, i.e. a final coating layer in direct contact with the environment, on at least a main face of a substrate such as an ophthalmic lens for eyewear in order to impart to the coated main face specific properties such as anti-smudge, anti-soiling or anti-fog properties to the coated face of the substrate. In particular, it is a current practice to deposit an anti-smudge or anti-soiling topcoat layer, also often named hydrophobic and/or oleophobic topcoat layer, on a main face of an ophthalmic lens.

In general, these topcoat layers have very low thicknesses, typically of 100 nm or less, preferably 50 nm or less, preferably 10 nm or less, with a minimal thickness of generally 0.1 nm.

Typically, the deposition of such a topcoat is made by brushing, dipping, centrifugation (spin-coating), spraying or evaporation. Brushing results in irregular application and requires to have a source of liquid top coat. The source is an opened one which can lead to contamination of the atmosphere; spraying has similar issues : releasing topcoat material in the atmosphere, and also needs a specific machine if one desires to control the spread of the material.

Although all these processes can be implemented in a laboratory, in a plant or in an eye-care shop, they are generally dependant on costly or at least bulky machines that one needs to be trained to use.

Dipping is implemented using a dip machine in which the topcoat material, dispersed in a fluorinated solvent, is in liquid form. This process not only necessitates to have a dip machine, but also needs to have a waste disposable device to get rid of the waste.

The evaporation process necessitates to use an evaporation machine, generally working at low pressure, and a high temperature to evaporate the coating material.

Further, all the known deposition processes and in particular dipping and evaporation processes remain costly and cumbersome for implementation in an eye-care shop or store.

Therefore, the aim of the invention is to provide a method for depositing a topcoat layer on a face of a substrate, typically a transparent optical substrate and in particular a transparent spectacle glass such as an ophthalmic lens or a sunglass which overcomes the drawbacks of the known processes and more specifically is simple and easy to implement, especially in an eye-care shop or store.

Another object of the invention is also to provide a flexible deposition device for the deposition method which can be stored and easily used in a eye-care shop or store for forming a topcoat layer on at least one main face of a spectacle glass.

The above goals are achieved according to the invention by providing a method for depositing a topcoat layer on at least one face of a substrate which comprises the steps of :
a) providing a flexible deposition device comprising a flexible supporting media having a supporting surface coated with a film of a topcoat material,
b) bringing into contact said film of topcoat material of the flexible deposition device with said face of the substrate,
c) applying a pressure on the flexible supporting medium so that said flexible deposition device conforms to the geometry of said face of the substrate, and
d) peeling off said flexible supporting medium from said substrate,
whereby the topcoat material is at least partially separated from the supporting medium and deposited on the contacted face of the substrate to form said topcoat layer.

In a preferred embodiment, the supporting face of the flexible supporting medium has a lower surface energy than the contacted face of the substrate, thereby facilitating the separation of the topcoat material from the flexible supporting medium and its deposition and adherence on the contacted face of the substrate.

In a further preferred embodiment, before contacting step b), the face of the substrate to be contacted is treated, e.g. by plasma or corona treatment, or any other known treatment, to increase its surface energy.

In a still further preferred embodiment, the method of the invention comprises, after peeling off the flexible supporting medium (step d), a further step e) wherein the topcoat material deposited on the face of the substrate is subjected to a fixing treatment and a step f) of removing any excess of unfixed topcoat material, e.g. through wiping with a cloth.

In preferred embodiments, step a) comprises the steps of:
a1) providing a flexible supporting medium,
a2) coating at least one of its surfaces with said film of topcoat material by dipping the supporting medium in a solution containing said topcoat material, by spin-coating or spraying said topcoat material on the surface of the supporting medium, by wiping the topcoat material onto the supporting medium or by evaporating said topcoat material onto the supporting medium in an evaporator, and
a3) ensuring that the film of topcoat material on the flexible supporting medium is not wiped or damaged.

Preferably, an additional step a1 bis) of treating the surface of the flexible supporting medium with a treatment to reduce its surface energy is applied between step a1) and step a2).

In a version of the invention, the film of topcoat material on the supporting medium is a film of wet topcoat material, which is in a state either liquid, a viscous semi-liquid material (e.g. pressure sensitive adhesives), a dried liquid coating or in a jellified liquid form such as a wax.

The topcoat material is most often, just before transferring it from the flexible supporting medium to the substrate, in a liquid or semi-liquid state. By liquid or semi-liquid material it is meant a material having a solid content ranging from 0.5 to 75 weight %, the complement being a solvent or a mixture of solvents. The solid content is principally made of molecules intended to bring highly hydrophobic or hydrophilic properties to the surface, in order to impart anti-smudge, anti-soiling, anti-fouling or anti-fog properties to the surface, and do not comprise reticulated polymeric materials.

In an alternative embodiment the topcoat material is dried after being deposited on the flexible supporting medium and it can then be either wetted back before applying the topcoat on the substrate or applied directly as a dried material.

The invention is also directed to a flexible deposition device which comprises a flexible supporting medium having a supporting surface coated with a film of topcoat material, said flexible supporting medium being adapted to allow deposition of at least part of the topcoat material to form a topcoat layer on a face of a substrate using the above method.

The first step a) of the topcoat layer deposition method of the invention is to provide a flexible deposition device comprising a flexible supporting medium having a supporting surface coated with a film of a topcoat material.

Preferably, the flexible supporting medium is a piece of a solid flexible material which is chemically inert with regard to the topcoat material to be deposited on one of its face. Of course, in general, the surface area of the flexible supporting medium is at least the same as the surface area of the face of the substrate on which the topcoat material is to be deposited, although larger or smaller surface area can be used depending upon the final application.

Preferably, the flexible supporting medium will have an uncoated portion projecting beyond the surface area of the substrate face to be coated for facilitating its peeling off after application of the flexible deposition device on the face of the substrate. Typically, the flexible supporting medium is made of classical polymers and copolymers. Preferred polymers and copolymers are cellulose esters, silicones, polycarbonates, polymethylmethacrylates and polyurethanes.

Preferred flexible supporting media are made of cellulose esters such as cellulose acetate propionate, cellulose acetate butyrate, cellulose triacetate and cellulose diacetate, in particular cellulose triacetate.

Thickness of the flexible supporting medium typically ranges from 40 micrometers to 2 millimeters, preferably from 80 micrometers to 1 millimeter so as to be both flexible and resistant to tear.

In one embodiment, the static contact angle of the surface of the flexible supporting medium to be coated with the topcoat material is from 40° included to 130° included, preferably between 80° included and 115° included.

Static contact angles with water are determined according to the liquid drop method, which is classically known by the person skilled in the art and which consists essentially in depositing a droplet of distilled water with a diameter smaller than 2mm onto the coated surface of said optical article and measuring the contact angles, when the surface is horizantal.

The topcoat material for forming the film of topcoat material on the surface of the flexible supporting medium can be any known material generally used to form antifog, anti-smudge, anti-soiling or anti-fouling topcoat on a substrate such as an ophthalmic glass or sunglass.

Preferred topcoat material are anti-smudge, anti-soiling or anti-fouling topcoat materials.

These anti-smudge coatings, also called "hydrophobic and/or oleophobic coatings", are well known in the art, and are generally formed by conventional techniques of evaporation in a vacuum. They are generally manufactured from fluorosilanes or fluorosilazanes, that is, silanes and silazanes containing fluorine atoms.Fluorosilanes particularly suited to producing anti-smudge coatings are those containing fluoropolyether groups described in U.S. Pat. No. 6,277,485.

These fluorosilanes are given by the general formula: 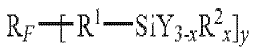 in which R_{F} is a monovalent or divalent polyfluoropolyether group, R¹ is a divalent alkylene, arylene or a combination of these two, optionally containing one or several heteroatoms or functional groups and optionally substituted by one or several halogens, and preferably containing 2 to 16 carbon atoms; R² is a lower alkyl group (that is, an alkyl group in C₁-C₄); Y is a halogen atom, a lower alkoxy group (that is, an alkoxy group in C₁-C₄, preferably methoxy or ethoxy), or a lower acyloxy group (that is, -OC(O)R³>where R³ is an alkyl group in C₁-C₄); x is 0 or 1; an y is 1 (R*_{F}* is monovalent) or 2 (R*_{F}* is divalent). Suitable compounds generally have an average number molecular weight of at least 1000. Preferably, Y is a lower alkoxy group and R*_{F}* is a perfluoropolyether group.

Other recommended fluorosilanes are those with the formula: 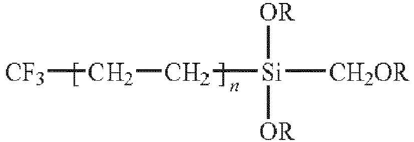 where n=5, 7, 9 or 11 and R is an alkyl group, preferably in C₁-C₁₀ such as - CH₃, -C₂H₅ and -C₃H₇;
CF₃(CF₂)₅CH₂CH₂Si(OC₂H5)₃ ((tridecafluoro-1,1,2,2-tetrahydro)octyltriethoxysilane);

CF₃CH₂CH₂SiCl₃;

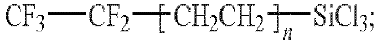

et 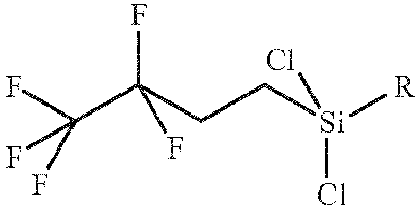 where n=7 or 9 and R is as defined above.

Compositions containing fluorosilanes also recommended for the preparation of hydrophobic and/or oleophobic top-coats are described in U.S. Pat. No. 6,183,872. They contain fluoropolymers with organic groups carrying silicon-based groups represented by the following general formula and with a molecular weight of 5.10² to 1.10⁵: 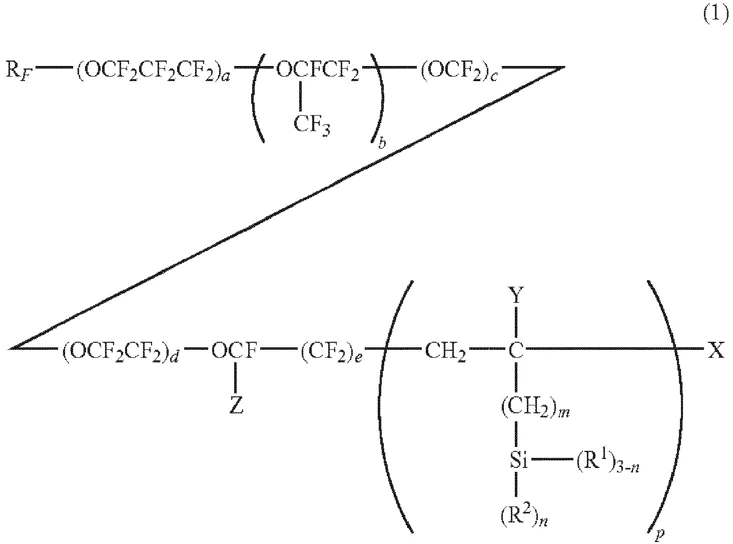
in which R*_{F}* represents a perfluoroalkyl group; Z represents a fluoro or trifluoromethyl group; a, b, c, d and e each representing, independently from each other, 0 or an integer greater than or equal to 1, provided that the sum a+b+c+d+e is not less than 1 and that the order of the repeated units between the brackets indexed under a, b, c, d and e are not limited to the one given; Y represents H or an alkyl group comprising from 1 to 4 carbon atoms; X represents an atom of hydrogen, bromine or iodine;
R¹ represents an hydroxyl group or a hydrolysable group; R² represents an atom of hydrogen or a monovalent hydrocarbon group; m represents 0, 1 or 2; n represents 1, 2 or 3; and p represents an integer equal to at least 1, preferably equal to at least 2.

A formulation containing a fluorosilane given by the previous formula (1) is marketed by DAIKIN INDUSTRIES with the name OPTOOL DSX®.

The published patent application US-2005/0168685 describes anti-smudge coatings formed from two or more species of silane compound selected so that each type of the species independently imparts a different dynamic friction coefficient on the surface of the lens after treatment, at least one or several of these species being fluorinated compounds of silane, so as to make the lens surface sufficiently non-slippery, so that it can be edged.

In a preferred embodiment, at least one of the species comprises the fluorinated compounds of silane given by the previous formula (1).

The document JP 2005 187936 describes fluorinated compounds of silane suitable for forming anti-smudge coatings and particularly compounds given by the formula: 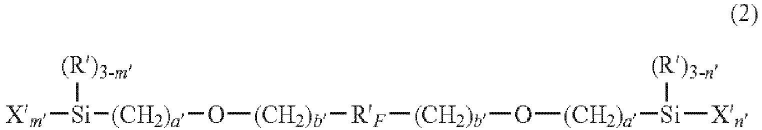 wherein
R'_{F} is a linear chain divalent perfluoropolyether radical,
R' is an alkyl radical in C₁-C₄ or a phenyl radical,
X' is a hydrolysable group,
a' is an integer from 0 to 2,
b' is an integer from 1 to 5, and
m' and n' are integers equal to 2 or 3.

A fluorosilane compound given by the formula (2) above is marketed by SHIN-ETSU CHEMICAL CO, Ltd with the name KY-130®.

Fluorosilane compounds given by the formula (2) and methods for preparing them are also described in the patent application EP 1 300 433.

The topcoat material can also be a hydrophilic material such as silicone polyethylene oxide (SiPEO) composition, typically used for forming antifog topcoat. Preferred antifog coating materials are perfluoro polyether silanes as disclosed in patent application US 2010/0053547. Antifog topcoat materials are also disclosed, in particular in international patent applications WO 2011/080472, WO 2012/153072 and WO 2013/013929, as well as in Japanese patent application JP 2005/281143.

In general, the thickness of the topcoat material film on the flexible supporting medium is comprised in the interval [10nm, 300nm].

In a specific embodiment of the flexible deposition device, the topcoat material film is sandwiched between the flexible supporting medium and a removable protective tape.

The removable protective tape usually has a lower surface energy than the supporting surface of the flexible supporting medium.

The removable protective tape can be made of the same materials as the flexible supporting medium but is generally much thinner. The thickness of the removable protective tape typically is in the interval of 20 to 60 microns. As already mentioned the flexible deposition device can be made by coating at least one surface of the flexible supporting medium with a film of topcoat material. Coating of the surface can be made by dipping, spin-coating, spraying, wiping or evaporation, these techniques being well known in the art.

In some embodiments, before coating the surface of the flexible supporting medium, the surface is treated to lower its surface energy, in particular through the means of applying a release agent by wiping, spraying or dipping. The release agent may be applied through the use of a previous deposition of an anti-smudge coating that is treated so as to be fixed to the supporting medium. In that latter case, the topcoat material to be transferred is deposited in a second step on the flexible supporting medium which has been previously treated by an anti-smudge topcoat. For example the anti-smudge topcoat acting as release agent may be one that has a smaller static angle than the one of the topcoat material to be transferred.

The substrate is typically a transparent optical substrate and preferably is a spectacle ophthalmic glass or sunglass.

The optical substrate can be a bare substrate or a substrate already coated with one or more functional coatings such as an anti-shock primer coating, an anti-abrasion and /or anti-scratch coating, a polarised coating, a photochromic coating, an antistatic coating, a coloured coating or an antireflective coating.

Such substrates are disclosed in particular in Patent Application US 2010/0053547.

In preferred embodiments, the surface onto which the topcoat layer will be formed is the surface of a bare substrate, the surface of the outermost layer of an anti-abrasion or anti-scratch coating, or the outermost layer of an anti-reflective stack.

As mentioned above, the method of the invention comprises bringing the film of topcoat material of the flexible deposition device into contact with the face of the substrate and applying a pressure on the flexible supporting medium to conform as much possible the flexible deposition device to the geometry of the contacted face of the substrate.

Pressure can be applied manually or using an apparatus such as an inflatable membrane apparatus as disclosed in international patent application WO 2009/033873.

Typically, pressure can be applied by hand.

Typically, pressure is applied for 10 seconds to 10 minutes at a temperature ranging from room temperature (18°C to 23°C) up to 40°C. Then, the flexible supporting medium is peeled off.

It has to be noted that, when the thickness of the topcoat material on the flexible supporting medium is high, all the topcoat material may not be deposited on the substrate insofar as the deposited portion of the topcoat material is sufficient to form an acceptable topcoat layer on the substrate.

Of course, when a sandwiched flexible deposition device is used, the removable protective tape is peeled off before application of the flexible deposition device on the surface of the substrate.

Preferably, the surface of the substrate to be coated is subjected to a treatment for increasing its surface energy prior to the application of the flexible deposition device. Such treatments are well known in the art and comprise plasma or corona treatment or a treatment with an acid or basic solution.

Indeed, it is better that the surface energy of the flexible supporting medium, prior to the deposition of the film of topcoat material, is lower than the surface energy of the surface of the substrate one wants to deposit the topcoat on. Either one can increase the surface energy of the substrate or one can decrease the surface energy of the flexible supporting medium, or one can do both. Alternatively, one may add a thicker layer of topcoat material to the film of topcoat material so that one may transfer part of it regardless of the relationship between the surface energies.

Also, after deposition of the topcoat material on the surface of the substrate and withdrawal of the flexible supporting medium, one may subject the deposited topcoat material to a fixing step. Such a fixing step can be a heating step. Temperature of this heating step typically ranges from 25°C to 70°C..

The thickness of the deposited topcoat ranges from 1 mm to 100mm. Typically the topcoat thickness is lower than 100mm, preferably equal to or lower than 10mm.

The surface energy of the various surfaces can be measured by any known method, in particular as the values of the surface energies are not important *per se*, but in relation with each other.

### Examples

### Flexible deposition device

### Flexible supporting medium :

The flexible supporting media used in the examples are cellulose triacetate (TAC) films.
Size 65mm diameter circle Thickness 80 micrometers

A silicone film of same size and thickness is used as a comparative example.

The topcoat material is OPTOOL DSX® from DAIKIN with different solid contents (active material) or silicone polyethylene oxide (SiPEO] such as provided by Gelest.

The topcoat material is placed on a Kimwipe® wipe purchased from Kimberly Clark. The topcoat is deposited on the surface using either a circular or a back and forth motion to cover the entire surface.

These flexible supporting media are then used after different storage times for deposition of a topcoat film on a lens before applying the support media charged with the topcoat material to the lenses substrate. In particular, in the examples the storing time ranges from 10min to 120 hours.

### Substrate

The substrate is a bare lens of CR39® from PPG with a hard coat (as in example 3 of EP 0614957) and a classical antireflective stack, which ending layer is an SiO layer, which is subjected to a plasma treatment for 2 minutes using a plasma chamber purchased from Diener. For that exemplary plasma treatment, the plasma is turned on at power of 80% for 2 min when pressure in the treating chamber reaches 0.4mbar or less.

### Topcoat deposition

The flexible deposition device is manually applied on the face of the plasma treated lens and a manual pressure is applied to conform the film to the lens surface.

After 5 minutes the flexible supporting medium is peeled off and the coated lens is left for 5 minutes in the environment.

### Test

After deposition of the topcoat, the lenses are tested to determine whether or not a topcoat layer has been deposited on the lens surface. Before the test, the lens surface is washed with isopropyl alcohol (IPA).

The test consists in forming an ink drop on the surface of the lens using a Sharpie pen. Formation of ink beads demonstrates that a topcoat layer has been formed on the lens surface. On the contrary, when no ink beads are formed, the test demonstrates that no topcoat layer has been deposited on the surface.

Conditions and results of the examples are given in the table below.

| **TABLE** | | | | | | | | | | | | | |
|---|---|---|---|---|---|---|---|---|---|---|---|---|---|
| **Examples n°** | **1** | **2** | **3** | **4 comparative** | **5** | **6** | **7** | **8** | **9** | **10** | **11** | **12** | **13 *** |
| **Supporting flexible medium** | TAC | TAC | TAC | Silicone one | TAC | TAC | TAC | TAC | TAC | TAC | TAC | TAC | TAC |
| **Wet topcoat material** | DS X 20% | DS X 5% | DS X 1% | DS X 20% | DS X 1% | DS X 1% | DS X 1% | DS X 1% | DS X 1% | DS X 1% | DS X 1% | DS X 1% | SiPEO |
| **Storage time of flexible deposition device** | 10min | 10 min | 10 min | 10 min | 1 hour | 2 hours | 4 hours | 6 hours | 8 hours | 24 hours | 48 hours | 120 hours | 10 min |
| **Sharpie pen test Ink beads formation** | yes | yes | yes | no | yes | yes | yes | yes | yes | yes | yes | yes | yes |

| | | | | | | | | | | | | | |
|---|---|---|---|---|---|---|---|---|---|---|---|---|---|
| DSX % stands for OPTOOL DSX ® from DAIKIN with x weight % of active material (solid content) [* Exemple 13 hydrophilic topcoat SiPEO from GePest] | | | | | | | | | | | | | |

## Claims

1. A method for depositing a topcoat layer on, at least, one face of a substrate, comprising the steps of:
a) providing a flexible deposition device comprising a flexible supporting medium having a supporting surface coated with a film of a topcoat material,
b) bringing into contact said film of topcoat material of the flexible deposition device with said face of the substrate,
c) applying a pressure on the flexible supporting medium so that said flexible deposition device conforms to the geometry of said face of the substrate, and
d) peeling off said flexible supporting medium from said substrate, whereby the topcoat material is at least partially separated from the flexible supporting medium and deposited on the contacted face of the substrate to form said top coat layer.

2. Method of claim 1, wherein said supporting surface of the flexible supporting medium has a lower surface energy than said contacted face of the substrate.

3. Method according to claim 2, wherein the static contact angle of the supporting face of the supporting medium with water is comprised between 40° and 130° and the static contact angle of the substrate with water is comprised between 0° and 60° and is smaller than the one of the supporting medium.

4. Method according to any of claims 1 to 3, wherein the layer of topcoat material on the flexible supporting medium has a thickness comprised in the interval [10nm, 300 nm ].

5. Method according to any one of claims 1 to 4, wherein, at step c), the topcoat material is maintained at a temperature comprised between room temperature and 40°C.

6. Method according to any one of claims 1 to 5, wherein, step a) comprises the steps of :
a1) providing a flexible supporting medium and
a2) coating at least one of its surfaces with said film of topcoat material by dipping the supporting medium in a solution containing said topcoat material, by spin-coating or spraying said topcoat material on the surface of the supporting medium, by wiping the topcoat material onto the supporting medium or by evaporating said topcoat material onto the supporting medium in an evaporator, and

7. Method, according to claim 6, wherein an additional step a1 bis) of treating the surface of the flexible supporting medium with treatments to reduce its surface energy, is applied between step a1) and step a2).

8. Method according to any one of claims 1 to 7, wherein, the substrate provides at step c) is one of a bare substrate comprising anti-abrasion or anti-scratch coating as outermost layer, or a substrate comprising an anti-reflective stack with one of the layers of the antireflective stack as the outermost layer on the substrate.

9. Method according to any one of claims 1 to 8, wherein, before contacting step b), said face of the substrate is treated, e.g. by plasma or corona treatment, to increase the surface energy of said face of the substrate.

10. Method according to any one of claims 1 to 9, further comprising, after step d), a step e) wherein the topcoat material deposited on said face of the substrate is subjected to a fixing treatment and a step f) of removing any excess of unfixed topcoat material, e.g. through wiping.

11. Method according to any one of claims 1 to 10, wherein the topcoat layer deposited on said face of the substrate is an antifog layer, an antifouling layer, an antisoiling layer, a hydrophilic layer, a hydrophobic layer, or an omniphobic layer.

12. Method according to any one of claims 1 to 11, wherein the thickness of the topcoat layer formed on said face of the substrate is equal to or lower than 100 nm, preferably equal to or lower than 50 nm, more preferably equal to or lower than 10 nm.

13. A flexible deposition device comprising a flexible supporting medium having a supporting surface coated with a film of topcoat material, said flexible supporting medium being adapted to allow deposition of at least part of the topcoat material to form a topcoat layer on a face of a substrate by using the method according to any one of claims 1 to 12.

14. Flexible deposition device according to claim 13, wherein the film of topcoat material is sandwiched between, on one side, the flexible supporting medium, and on the other side, a removable tape having lower surface energy than said supporting surface, said removable tape being removed before step a) of said method.

15. Flexible deposition device according to claim 13 or 14, wherein said flexible supporting medium is made of an inert material with regard to said topcoat material.
